(19) **Europäisches Patentamt European Patent Office Office européen des brevets**

(11) **EP 4 359 235 B1**

(12) **FASCICULE DE BREVET EUROPEEN**

(45) Date de publication et mention de la délivrance du brevet:
**26.11.2025 Bulletin 2025/48**

(21) Numéro de dépôt: **22747592.8**

(22) Date de dépôt: **24.06.2022**

(51) Classification Internationale des Brevets (IPC):
**B60G 17/08** (2006.01)     **B60G 17/018** (2006.01)
**B60G 17/0165** (2006.01)

(52) Classification Coopérative des Brevets (CPC):
**B60G 17/08; B60G 17/0165; B60G 17/0182;**
B60G 2400/102; B60G 2400/204; B60G 2400/821;
B60G 2400/90; B60G 2401/142; B60G 2401/16;
B60G 2500/10; B60G 2500/11; B60G 2600/02;
B60G 2800/70

(86) Numéro de dépôt international:
**PCT/EP2022/067394**

(87) Numéro de publication internationale:
**WO 2022/269057 (29.12.2022 Gazette 2022/52)**

(54) **PROCÉDÉ DE COMMANDE D'UN VÉHICULE MUNI D'AU MOINS UNE SUSPENSION COMMANDÉE PAR APPRENTISSAGE**

VERFAHREN ZUR STEUERUNG EINES FAHRZEUGS MIT MINDESTENS EINER LERNSTEUERUNGSAUFHÄNGUNG

METHOD FOR CONTROLLING A VEHICLE PROVIDED WITH AT LEAST ONE LEARNING-CONTROL SUSPENSION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2021 FR 2106858**

(43) Date de publication de la demande:
**01.05.2024 Bulletin 2024/18**

(73) Titulaire: **Ampere SAS**
**92100 Boulogne-Billancourt (FR)**

(72) Inventeurs:
• **DUBRAY, Edouard**
**78084 Guyancourt cedex (FR)**
• **GIACCONE, Thierry**
**78084 Guyancourt cedex (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
EP-A2- 0 417 695     WO-A2-2014/145018
FR-A1- 3 078 154     US-A1- 2014 195 112
US-A1- 2021 178 845

## Description

## Domaine technique

L'invention a pour domaine technique la commande des véhicules automobiles, en particulier la commande des suspensions commandables de tels véhicules.

## Techniques antérieures

Certains véhicules comprennent un amortissement variable (« Variable Damping », en langue anglaise), qui permet de piloter les suspensions du véhicule pour en améliorer la tenue de route, le dynamisme et le confort. En ce qui concerne le confort, l'objectif est de gommer les imperfections de la route, l'inconfort des portions de routes pavées ou d'un passage d'un dos d'âne par exemple. Une des problématiques de cette prestation est que les réglages pour le confort sont à l'opposé des réglages pour la tenue de route et pour le dynamisme. De fait, le réglage retenu va être celui qui offre le meilleur compromis. Néanmoins, ces réglages retenus risquent ne pas être optimaux pour chaque situation prise séparément.

Il existe un besoin d'une amélioration de l'amortissement du véhicule au fur et à mesure du roulage afin de proposer les meilleurs paramètres possibles selon les lieux et les situations données.

De l'état de la technique antérieure, on connait les documents suivants.

Le document US20140195112 décrit la construction d'un profil en Z de la route à partir des enregistrements d'une flotte de véhicules puis l'application d'actions correctives au niveau de chaque véhicule.

Le document US20150343873 décrit la détection de certaines perturbations de la route (trou, etc...) et leur transmission à un service hébergé (notamment cloud) pour construire une cartographie de ces perturbations et le partage aux autres véhicules. Les obstacles sont déterminés en utilisant une caméra, des capteurs d'accélération verticale, des capteurs de course d'amortisseurs ainsi que la vitesse et l'accélération à la roue.

Le document CN110654195 décrit l'anticipation de réglage de la dureté de l'amortissement en fonction du profil de la route vue par une caméra.

Le document WO2021/041950 décrit plusieurs modes de réglage d'un vélo pouvant être choisis par l'utilisateur. Ces modes peuvent être définis selon des valeurs pré-définies en usine, parmi un grand nombre de possibilités mais facilité par la prise en compte du profil de l'utilisateur (son niveau technique, son niveau physique) et des caractéristiques du vélo.

L'utilisateur peut décider, pour chacun de ces modes, de passer dans une mise au point automatique d'un des paramètres du mode. On surveille alors le terrain et on réalise une action de correction sur l'amortissement en fonction du résultat de la surveillance. Les actions sont prises sur dépassement de seuils des capteurs pour éviter une arrivée en butée ou un amortissement trop ferme.

L'utilisateur à la possibilité de garder le réglage obtenu par cette mise au point et de le mémoriser. Il peut également mémoriser les réglages pour une zone d'évolution identifiée en fonction d'une position géolocalisée. La géolocalisation du véhicule est celle d'un smartphone (« téléphone intelligent ») et est réalisée par GPS ou triangulation cellulaire du téléphone. La précision n'est pas importante du fait de l'application de la correction dans une zone assez large, d'évolution du vélo. De plus, des vélos « connectés » dans une même zone d'évolution peuvent communiquer entre eux de sorte que le vélo « suiveur » reçoit les informations captées par le premier vélo.

Le problème technique demeure non résolu.

Le document US2021/178845 A1 divulgue un procédé de commande d'un véhicule automobile et un système de commande. Les documents US2014/195112 A1, WO2014/145018 A2, EP0417695 A2, FR3078154 A1 divulguent d'autres procédés et systèmes de commande.

## Exposé de l'invention

L'invention a pour objet un procédé de commande d'un véhicule automobile comprenant une suspension à amortissement commandable, la suspension étant reliée à un circuit hydraulique par l'intermédiaire d'une électrovanne de sorte à modifier l'amortissement en limitant le débit d'huile dans l'amortisseur, le procédé de commande comprenant les étapes suivantes :

- lorsque la position et la direction de circulation du véhicule correspondent à une position et à une direction associées à une perturbation à amortir mémorisées dans une cartographie, on réalise un apprentissage en déterminant un nouveau jeu de paramètres fonction d'un jeu de paramètres optimal et on commande l'électrovanne selon le nouveau jeu de paramètres,

- on enregistre la position, la vitesse et la direction du véhicule, ainsi que la date, puis on détermine un score associé au nouveau jeu de paramètres,

- on détermine si le score associé au nouveau jeu de paramètres est supérieur au score du jeu de paramètres optimal mémorisé, le score associé à un jeu de paramètres étant fonction de la consigne associée, du dépassement de la consigne et de la durée nécessaire pour atteindre le régime permanent,

- si tel est le cas, on enregistre le jeu de paramètres optimal comme jeu de paramètres supérieur ou inférieur en fonction du signe de la variation des paramètres, puis on mémorise le nouveau jeu de paramètres comme jeu de paramètres optimal.

Le jeu de paramètres comprend une consigne de commande de l'électrovanne et une durée d'application de la consigne.

Pour réaliser l'apprentissage d'un nouveau jeu de paramètres, on peut incrémenter la valeur de la consigne d'un pas prédéterminé à chaque passage de la perturbation tant que le score s'améliore, puis on peut incrémenter la durée d'application d'un pas prédéterminé à chaque passage ultérieur tant que le score s'améliore, lorsque le score cesse de s'améliorer, on peut considérer que l'apprentissage du jeu de paramètres est terminé.

On peut prendre en compte le mode de conduite dans le calcul du score.

On peut homogénéiser les consignes de l'électrovanne en fonction de la vitesse et de la masse du véhicule.

Le véhicule comprenant des suspensions commandées avants et arrières, on peut commander les suspensions arrières avec un jeu de paramètres spécifiques, proportionnel au jeu de paramètres des suspensions avants, décalé dans le temps, et éventuellement avec un ratio prédéterminé appliqué à la consigne de commande de l'électrovanne, le décalage dans le temps dépendant de l'empattement du véhicule et de la vitesse du véhicule lors du franchissement de la perturbation.

Lorsque l'on détermine une variation d'accélération verticale supérieure à un seuil ou une fréquence de la variation d'accélération verticale supérieure à un seuil, on peut réaliser les étapes suivantes : on détermine qu'une perturbation est en cours de franchissement et lorsque la position et la direction de circulation du véhicule ne correspondent pas à une position et à une direction associées à une perturbation à amortir mémorisées dans la cartographie, on enregistre la position et la direction du véhicule dans la cartographie, et on enregistre par ailleurs la vitesse et la date, puis on détermine un score associé au jeu de paramètres en cours et on enregistre le jeu de paramètres actuel comme jeu de paramètres optimal pour cette perturbation.

On peut déterminer la nature ponctuelle, courte ou longue de la perturbation, en fonction du nombre et de l'amplitude des variations d'accélération verticale ainsi des positions associées à ces variations ou en fonction de la durée de dépassement du seuil de fréquence de variation.

Lorsque la perturbation est ponctuelle, on peut déterminer un jeu de paramètres en entrée, lorsque la perturbation est courte, on peut déterminer en plus un jeu de paramètres en sortie de la perturbation, et lorsque la perturbation est longue, on peut déterminer également un jeu de paramètres en milieu de perturbation, chaque jeu de paramètres faisant l'objet d'un apprentissage.

Lorsque la position et la direction de circulation du véhicule correspondent à une position et à une direction prédéterminée d'une perturbation à amortir, et que l'on détermine que la variation d'accélération verticale est nulle ou que la durée de dépassement du seuil de fréquence de variation est nulle, on peut considérer qu'il n'y a plus de perturbation, et on peut supprimer alors les données correspondantes.

On peut déterminer la présence, la position et la taille d'une perturbation de la chaussée par l'intermédiaire d'un capteur optique, notamment une caméra.

L'invention a également pour objet un système de commande comprenant un serveur et au moins deux véhicules automobiles, chaque véhicule comprenant une suspension à amortissement commandable, la suspension étant reliée à un circuit hydraulique par l'intermédiaire d'une électrovanne de sorte à modifier l'amortissement en limitant le débit d'huile dans l'amortisseur, munis chacun de moyens de traitement et de moyens d'acquisition aptes à exécuter le procédé de commande décrit ci-dessus, dans lequel, chaque véhicule transmet au serveur des données de cartographie de perturbation dont l'apprentissage est terminé, et, chaque véhicule est apte à requérir des données de cartographie pour des positions qui ne sont pas associées à un jeu de paramètres dans la cartographie du véhicule, les données de cartographie comprenant un jeu de paramètres, la catégorie de perturbation, la masse, la position, la direction et la vitesse du véhicule ainsi que le score de confort associés audit jeu de paramètres.

Les moyens de traitement du serveur peuvent être configurés pour réaliser un tri des données reçues des véhicules en éliminant les scores les plus faibles et/ou les valeurs des paramètres dont la dispersion par rapport à la moyenne est supérieure à un certain seuil, fonction notamment d'un écart type prédéterminé.

Le procédé de commande selon l'invention présente l'avantage d'être auto-adaptatif en adaptant automatiquement le comportement du véhicule à l'usure et au vieillissement de l'amortissement et potentiellement de compenser certaines anomalies.

**Brève description des dessins**

D'autres buts, caractéristiques et avantages de l'invention apparaîtront à la lecture de la description suivante, donnée uniquement à titre d'exemple non limitatif et faite en référence aux dessins annexés sur lesquels :

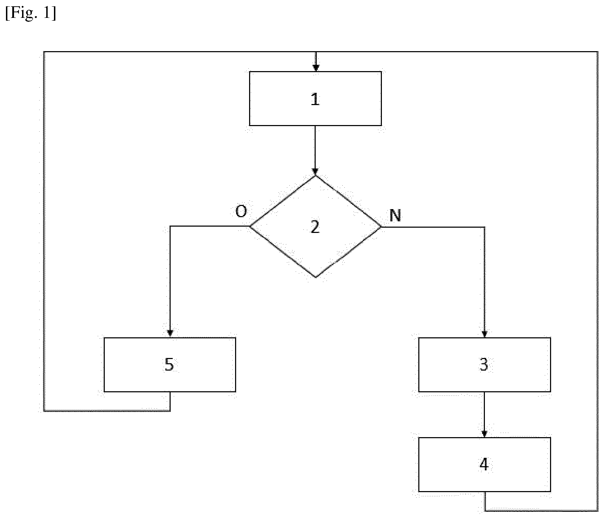

- la [Fig. 1] illustre les principales étapes d'un procédé de commande selon l'invention.

**Description détaillée**

Le procédé de commande d'un véhicule automobile muni d'au moins une suspension à amortissement commandable permet de détecter et mémoriser des perturbations de la chaussée pouvant être perçues négativement par les occupants du véhicule. Le procédé de commande permet également d'améliorer la prise en compte de ces perturbations au travers d'un apprentissage des paramètres de commande de la suspension à amortissement commandable, réparti sur plusieurs franchissements de la même perturbation.

On définit une perturbation comme une partie de la chaussée induisant une modification du comportement vertical et longitudinal du véhicule, notamment une ornière, un ralentisseur ou une zone pavée.

On rappelle qu'une suspension à amortissement commandable comprend un amortisseur relié à un circuit hydraulique par l'intermédiaire d'une électrovanne commandable. Selon une consigne reçue par l'actionneur de cette électrovanne, le débit de liquide hydraulique est modifié, ce qui modifie alors le facteur d'amortissement de la suspension.

Pour la suite de la description, on définit un jeu de paramètres de commande d'une suspension à amortissement commandable comme une consigne d'ouverture de l'électrovanne, et une durée d'application de la consigne.

Au cours d'une première étape 1, on détecte le franchissement d'une perturbation de la chaussée lorsque l'accélération verticale du châssis du véhicule dépasse un seuil prédéterminé ou lorsque la fréquence de variation d'accélération verticale est supérieure à un seuil.

Dans un mode de réalisation particulier, on prend en compte des informations de détection d'une perturbation de la chaussée par l'intermédiaire d'un capteur optique, notamment une caméra. Des informations provenant des moyens de fusion de données du véhicule comprennent notamment la nature des objets reconnus et leur position par rapport au véhicule. Appliquées aux perturbations de la chaussée, on dispose alors de façon prédictive par rapport au trajet planifié du véhicule, d'une détection des prédictions, permettant d'initier la détection de perturbation ou l'apprentissage en amont de la perturbation. De plus, une telle détection permet de mieux prendre en charge une perturbation lors d'un premier passage.

Au cours d'une deuxième étape 2, lors du franchissement d'une perturbation, on détermine si la perturbation est présente dans une cartographie des perturbations embarquée dans le véhicule. Pour identifier chaque perturbation, la position du véhicule lors du franchissement de la perturbation est associée à la direction du véhicule de sorte à discriminer les perturbations en fonction de leur position sur les voies de circulation. La direction peut être déterminée en fonction de la dérivée entre des positions de début et de fin de la perturbation. De préférence, la direction peut être déterminée en fonction de la dérivée entre la position de début de perturbation et une position quelques secondes après l'entrée sur la perturbation, notamment trois secondes. Une telle détermination permet de mieux couvrir la variété de zones pavées.

Si on détermine que la perturbation n'est pas présente dans la cartographie des perturbations, le procédé se poursuit par une troisième étape 3, au cours de laquelle on enregistre la position et la direction de circulation associées à cette perturbation afin de pouvoir en améliorer la prise en compte par le biais d'un apprentissage d'un jeu de paramètres optimal. On note qu'un jeu de paramètres est spécifique à une perturbation.

Néanmoins, dans des modes de réalisation particulier, des jeux de paramètres prédéfinis sont mémorisés. Un tel mode de réalisation est particulièrement avantageux lorsqu'il est couplé à la détection du type de perturbation et à son enregistrement dans la cartographie. En effet, on peut discriminer entre une perturbation ponctuelle comme une ornière ou un nid de poule, une perturbation courte ou une perturbation longue. Pour réaliser cela, on compare les positions des instants durant lesquels on détecte une variation de l'accélération verticale du châssis du véhicule à des seuils prédéterminés et associés chacun à un type de perturbation. Une perturbation est délimitée par deux variations de l'accélération verticale successives et de signes opposés ou par le début et la fin d'une période de dépassement d'un seuil par la fréquence de variation de l'accélération verticale, de sorte que si les positions associées sont sensiblement superposées, la perturbation est dite ponctuelle, si elles sont plus espacées, la perturbation est dite courte, et si elles sont encore plus espacées, la perturbation est dite longue.

Lorsqu'une nouvelle perturbation est ajoutée à la cartographie des perturbations, on lui associe un jeu de paramètres optimaux prédéterminé, notamment en fonction de son type.

Si une perturbation est ponctuelle, un seul jeu de paramètres optimaux est mémorisé.

Si une perturbation est courte, un jeu de paramètres optimaux associé à l'entrée de la perturbation et un jeu de paramètres optimaux associé à la sortie de la perturbation sont mémorisés.

Si une perturbation est longue, un jeu de paramètres optimaux associé à l'entrée de la perturbation, un jeu de paramètres optimaux intermédiaire et un jeu de paramètres optimaux associé à la sortie de la perturbation sont mémorisés.

De plus, on enregistre la date de franchissement (date calendaire et éventuellement, l'heure de franchissement), on détermine et on mémorise un score de confort associé à la prise en compte de la perturbation pour chaque jeu de paramètres. Dans un mode de réalisation particulier, on enregistre la masse du véhicule ainsi que la vitesse du véhicule. L'enregistrement de la masse repose sur des procédés connus au moyen de capteurs ou par estimation dynamique.

Au cours d'une quatrième étape 4, on détermine un score de confort déterminé en fonction d'une collection de valeurs de capteurs d'accélération/décélération de chaque roue individuellement ou tout autre type de grandeurs disponibles.

Selon l'invention, le score de confort est associé à la mesure de l'amortissement des oscillations des suspensions. Le meilleur score sera obtenu lorsque pour une consigne donnée, on obtient un faible dépassement et que le régime permanent est atteint rapidement. La mesure des oscillations revient à mesurer les accélérations verticales de la caisse du véhicule. Pour un certain type de perturbation donné, le score peut être calculé avec le spectre de réponse en accélération verticale de la caisse du véhicule sur une bande de fréquence donnée pondéré par un coefficient subjectif

Par exemple, la mesure de l'accélération verticale de la caisse du véhicule peut être réalisée à l'aide d'un gyroscope, à l'aide de capteurs de débattement ou encore à l'aide d'un traitement d'image sur des informations venant d'une caméra.

Par ailleurs, chaque type de perturbation peut avoir ses propres critères de confort et donc un calcul du score qui lui est spécifique.

De plus, certains véhicules comprennent un choix d'un mode de conduite (sport, confort, éco, ...) pour lequel l'attente en termes d confort peut différer. Le choix du mode de conduite est alors pris en compte dans détermination du score de confort.

Dans un cas particulier, le jeu de paramètres dépend de la vitesse du véhicule en entrée de la perturbation et/ou de la masse de ce dernier. En effet, à raideur de suspension donnée, la réaction du véhicule et le ressenti de l'occupant peut varier en fonction de la vitesse du véhicule ou de la masse de celui-ci.

Les variations de masse et de vitesse sont prises en compte en appliquant des ratios homothétiques sur la vitesse et sur la masse en appliquant l'expression suivante :

$$ia = ia1 \; x \; Fv \, (v, \; v1) \; x \; Fm \, (m, \; m1)$$

Avec :

- $ia$ : le consigne à appliquer à la vitesse de passage courante
- $ia1$ : la consigne à appliquer si la vitesse courante était la même qu'au premier passage
- $Fv$ : la fonction homothétique sur la vitesse
- $v$ : la vitesse courante du véhicule
- $v1$ : la vitesse au premier passage
- $Fm$ : la fonction homothétique sur la masse
- $m$ : la masse courante du véhicule
- $m1$ : la masse au premier passage

La même expression peut être employée pour recalibrer la consigne d'électrovanne en fonction de la masse en prenant en compte la vitesse moyenne et la masse moyenne de franchissement de la perturbation au lieu de la vitesse et de la masse courante du véhicule. L'intérêt de cette recalibration est de disposer de jeux de paramètre déterminés en fonction des valeurs les plus probables de vitesse et de masse.

Il est à noter également que la date associée à chaque position, est remplacée par la date courante à chaque fois que la perturbation associée est franchie. Ceci permet de maitriser la quantité de mémoire utilisée par le procédé de commande en réalisant des opérations qui effacent les points GPS dont la date dépasse un seuil de vieillesse prédéterminé. Ce nettoyage de la mémoire peut par exemple être déclenché lorsqu'un seuil d'occupation mémoire est atteint.

Si la perturbation est présente dans la cartographie, le procédé se poursuit par une cinquième étape 5 au cours de laquelle on réalise l'apprentissage d'un nouveau jeu de paramètres pour la prise en compte de cette perturbation basé sur le jeu de paramètres optimal mémorisé.

Pour chaque jeu de paramètres optimal associé à la perturbation, on détermine un nouveau jeu de paramètres et on applique ce nouveau jeu de paramètres avant l'entrée, le milieu ou la sortie de perturbation selon la partie de la perturbation auquel le jeu de paramètres correspond. Le nouveau jeu de paramètres est choisi parmi les jeux de paramètres inférieur et supérieur s'ils existent.

On détermine alors le score de confort pour chaque nouveau jeu de paramètres, on le compare au score de confort pour le jeu de paramètres optimal correspondant.

Si le score de confort du nouveau jeu de paramètres est supérieur au score de confort du jeu de paramètres optimal, alors le jeu de paramètres optimal est enregistré en jeu de paramètres inférieur, et le nouveau jeu de paramètres est enregistré en tant que jeu de paramètres optimal.

Si le score de confort du nouveau jeu de paramètres est inférieur ou égal au score de confort du jeu de paramètres optimal, alors le nouveau jeu de paramètres est enregistré en supérieur.

L'évolution du score et les jeux de paramètres inférieur, supérieur et optimal permettent de déterminer le nouveau jeu de paramètres à l'occurrence suivante La méthode de détermination du nouveau jeu de paramètres dépend du type de perturbations rencontré. Ces méthodes pourront par exemple être déterminées de manière empirique par simulation numérique de roulage du véhicule sur les différents types de perturbations. On peut également déterminer le nouveau jeu de paramètres en définissant initialement un « pas » par rapport au score optimal initial (ex : 0,05A, 50ms), puis faire une recherche d'optimal par dichotomie entre le jeu de paramètres optimal et le jeu de paramètres inférieur/supérieur dès qu'ils existent. Le pas employé doit demeurer faible en regard des valeurs optimales initiales de sorte que le comportement initial ne soit pas trop dégradé.

Le critère de convergence est défini en fonction d'un « pas » minimal de réglage réalisable. On considère qu'il y a convergence, lorsque l'écart entre le jeu de paramètres optimal et le jeu de paramètres inférieur et entre le jeu de paramètres optimal et le jeu de paramètres supérieur est égal au « pas ».

Par exemple, si l'on définit un « pas » de consigne de commande de 0,01 A, et que l'on a une consigne de commande égale à 1,54 pour le jeu de paramètres inférieur, égale à 1,55 pour le jeu de paramètres optimal et égale à 1,56 pour le jeu de paramètres supérieur, on considère que la convergence est atteinte.

La convergence est déterminée séparément pour la consigne de commande de l'électrovanne et pour la durée d'application de la consigne. On détermine la convergence pour la durée d'application après avoir déterminé la convergence de la consigne de commande de l'électrovanne et de la même façon que pour la commande de l'électrovanne. On considère que la convergence est atteinte pour un jeu de paramètres uniquement lorsque la convergence est atteinte à la fois pour la consigne de commande de l'électrovanne et la durée d'application de la consigne d'un même jeu de paramètres.

L'apprentissage du jeu de paramètres est considéré comme terminé lorsque le score de confort n'évolue plus à la hausse pour de nouveaux jeux de paramètres.

Dans un autre mode de réalisation, l'apprentissage est réalisé en permanence pour tenir compte de l'usure du véhicule. Aucun critère d'arrêt de l'apprentissage n'est alors employé.

Un véhicule automobile peut être muni de suspensions commandées à l'arrière et à l'avant. On détermine alors un jeu de paramètres optimaux pour les suspensions commandées à l'arrière. Dans un mode de réalisation particulier, les suspensions commandées à l'arrière sont commandées avec une loi de commande similaire à la loi de commande des suspensions commandées à l'avant, décalée dans le temps, et, affectée éventuellement, d'un ratio prédéterminé. Un tel mode de réalisation est un mode de réalisation simplifié permettent de minimiser la quantité de calcul nécessaire.

Le décalage est égal à l'écart temporel de passage sur l'obstacle entre les roues avant et les roues arrière, et peut être défini de la façon suivante :

$$\Delta t = (3800 \; x \; E) \; / \; v$$

Avec

Dt : décalage temporel
E : empattement
v : vitesse du véhicule.

Pour un empattement de 2,80m et une vitesse de 30km/h, cela représente un décalage de 3,54 secondes

Le ratio permet de déterminer l'intensité des consignes appliquées aux suspensions arrière proportionnellement à celle appliqués aux suspensions avant.

Dans un deuxième mode de réalisation, le procédé de commande comprend une étape déchange d'informations avec les moyens de navigation du véhicule permettant de déterminer en avance les jeux de paramètres à appliquer en fonction de l'itinéraire planifié.

Dans un troisième mode de réalisation du procédé de commande, la convergence du procédé d'apprentissage est améliorée par un partage des données avec les autres utilisateurs.

Les données partagées pour chaque perturbation sont au moins un jeu de paramètres ainsi que la position, notamment les positions de début et fin de perturbation, la direction, notamment de début de perturbation, la vitesse du véhicule, notamment à l'entrée de la perturbation, et le score de confort associés à chaque jeu de paramètres.

Préférentiellement, et si elles sont disponibles, la nature de la perturbation, la masse du véhicule voire la classe du véhicule (SUV, citadine, routière,...) sont partagés. La catégorie du véhicule est un paramètre qui représente un comportement dynamique spécifique et donc un jeu de paramètres spécifique par défaut, et prend en compte sa masse à vide par opposition à la masse en charge partagée.

Le partage de données est réalisé par l'intermédiaire d'un serveur distant, de type « dans le nuage » (« cloud » en langue anglaise) en différenciant le partage du véhicule vers le cloud et du cloud vers le véhicule. On comprend que ce mode de réalisation est destiné à être appliqué à une pluralité de véhicules en communication avec un, groupe de serveurs ou service cloud.

Dans le sens véhicule vers le cloud, l'envoi des informations identifiées ci-dessus est réalisé lorsque les jeux de paramètres inférieur, supérieur et optimal ont convergé tel que décrit plus haut. En variante, une date peut être associée à l'envoi de sorte à définir une périodicité d'envoi, ou un envoi ponctuel. En effet, les valeurs n'évoluant plus, leur envoi systématique ne fait pas sens au-delà de leur maintien dans la cartographie hébergé dans le serveur ou service cloud.

Dans le sens cloud vers véhicule, l'envoi d'informations est réalisé sur requête du véhicule, lorsque celui-ci ne dispose pas dans sa cartographie des perturbations sur le trajet en cours, sur le trajet programmé, ou sur le trajet le plus probable (« most probable path » en langue anglaise) accessible via un horizon électronique (ou eHorizon), l'information de l'existence d'un trajet programmé et sa définition étant issue du système d'aide à la navigation.

La requête d'informations comprend la position, le sens de circulation et la catégorie du véhicule. Lorsque la cartographie qui est dans le cloud dispose de scores optimaux pour cette catégorie de véhicule, les informations définies plus haut sont envoyées au véhicule en anticipation du trajet à venir à partir de la position fournie.

Les informations reçues sont alors enregistrées dans la cartographie locale pour chaque position qui correspond à une perturbation sur le trajet.

Pour les perturbations à venir ainsi obtenues, le jeu de paramètres optimal mémorisé est pris en compte et a de fortes chances d'être déjà très pertinents. Le temps de convergence vers les valeurs optimales pour le véhicule est ainsi réduit.

Du coté serveur ou service cloud, on peut réaliser une élimination des scores de confort les plus faibles et/ou les valeurs des paramètres dont la dispersion par rapport à la moyenne est supérieure à un certain seuil. Ce seuil peut être déterminé par rapport à un écart type déterminé.

## Revendications

1. Procédé de commande d'un véhicule automobile comprenant une suspension à amortissement commandable, la suspension étant reliée à un circuit hydraulique par l'intermédiaire d'une électrovanne de sorte à modifier l'amortissement en limitant le débit d'huile dans l'amortisseur, le procédé de commande comprenant les étapes suivantes :

   • lorsque la position et la direction de circulation du véhicule correspondent à une position et à une direction associées à une perturbation à amortir mémorisées dans une cartographie, on réalise un apprentissage en déterminant un nouveau jeu de paramètres fonction d'un jeu de paramètres optimal et on commande l'électrovanne selon le nouveau jeu de paramètres, un jeu de paramètres comprenant une consigne de commande de l'électrovanne et une durée d'application de la consigne,
   • on enregistre la position, la vitesse et la direction du véhicule, ainsi que la date, puis on détermine un score associé au nouveau jeu de paramètres,
   • on détermine si le score associé au nouveau jeu de paramètres est supérieur au score du jeu de paramètres optimal mémorisé, le score associé à un jeu de paramètres étant fonction de la consigne associée, du dépassement de la consigne et de la durée nécessaire pour atteindre le régime permanent,
   • si tel est le cas, on enregistre le jeu de paramètres optimal comme jeu de paramètres supérieur ou inférieur en fonction du signe de la variation des paramètres, puis on mémorise le nouveau jeu de paramètres comme jeu de paramètres optimal.

2. Procédé de commande selon la revendication **1,** dans lequel, pour réaliser l'apprentissage d'un nouveau jeu de paramètres, on incrémente la valeur de la consigne d'un pas prédéterminé à chaque passage de la perturbation tant que le score s'améliore, puis on incrémente la durée d'application d'un pas prédéterminé à chaque passage ultérieur tant que le score s'améliore, lorsque le score cesse de s'améliorer, on considère que l'apprentissage du jeu de paramètres est terminé.

3. Procédé de commande selon l'une quelconque des revendications précédentes, dans lequel on prend en compte le mode de conduite dans le calcul du score.

4. Procédé de commande selon l'une quelconque des revendications précédentes, dans lequel on homogénéise les consignes de l'électrovanne en fonction de la vitesse et de la masse du véhicule.

5. Procédé de commande selon l'une quelconque des revendications précédentes, dans lequel le véhicule comprend des suspensions commandées avants et arrières, on commande les suspensions arrières avec un jeu de paramètres spécifiques, proportionnel au jeu de paramètres des suspensions avants, décalé dans le temps, et éventuellement avec un ratio prédéterminé appliqué à la consigne de commande de l'électrovanne, le décalage dans le temps dépendant de l'empattement du véhicule et de la vitesse du véhicule lors du franchissement de la perturbation.

6. Procédé de commande selon l'une quelconque des revendications précédentes, dans lequel, lorsque l'on détermine une variation d'accélération verticale supérieure à un seuil ou une fréquence de la variation d'accélération verticale supérieure à un seuil, on détermine qu'une perturbation est en cours de franchissement et lorsque la position et la direction de circulation du véhicule ne correspondent pas à une position et à une direction associées à une perturbation à amortir mémorisées dans la cartographie, on enregistre la position et la direction du véhicule dans la cartographie, et on enregistre par ailleurs la vitesse et la date, puis on détermine un score associé au jeu de paramètres en cours et on enregistre le jeu de paramètres actuel comme jeu de paramètres optimal pour cette perturbation.

7. Procédé de commande selon la revendication 6, dans lequel on détermine la nature ponctuelle, courte ou longue de la perturbation, en fonction du nombre et de l'amplitude des variations d'accélération verticale ainsi des positions associées à ces variations, ou en fonction de la durée de dépassement du seuil de fréquence de variation.

8. Procédé de commande selon la revendication 7, dans lequel lorsque la perturbation est ponctuelle, on détermine un jeu de paramètres en entrée, lorsque la perturbation est courte, on détermine en plus un jeu de paramètres en sortie de la perturbation, lorsque la perturbation est longue on détermine également un jeu de paramètres en milieu de perturbation, chaque jeu de paramètres faisant l'objet d'un apprentissage.

9. Procédé de commande selon l'une quelconque des revendications précédentes, dans lequel, lorsque la position et la direction de circulation du véhicule correspondent à une position et à une direction prédéterminée d'une perturbation à amortir, et que l'on détermine que la variation d'accélération verticale est nulle ou que la durée de dépassement du seuil de fréquence de variation est nulle, on considère qu'il n'y a plus de perturbation, on supprime alors les données correspondantes.

10. Procédé de commande selon l'une quelconque des revendications précédentes, dans lequel on détermine la présence, la position et la taille d'une perturbation de la chaussée par l'intermédiaire d'un capteur optique, notamment une caméra.

11. Système de commande comprenant un serveur et au moins deux véhicules automobiles, chaque véhicule comprenant une suspension à amortissement commandable, la suspension étant reliée à un circuit hydraulique par l'intermédiaire d'une électrovanne de sorte à modifier l'amortissement en limitant le débit d'huile dans l'amortisseur, et munis chacun de moyens de traitement et de moyens d'acquisition aptes à exécuter le procédé de commande selon l'une quelconque des revendications précédentes, dans lequel, chaque véhicule transmet au serveur des données de cartographie de perturbation dont l'apprentissage est terminé, et, chaque véhicule est apte à requérir des données de cartographie pour des positions qui ne sont pas associées à un jeu de paramètres dans la cartographie du véhicule, les données de cartographie comprenant un jeu de paramètres, la catégorie de perturbation, la masse, la position, la direction et la vitesse du véhicule ainsi que le score de confort associés audit jeu de paramètres.

12. Système de commande selon la revendication **11,** dans lequel les moyens de traitement du serveur sont configurés pour réaliser un tri des données reçues des véhicules en éliminant les scores les plus faibles et/ou les valeurs des paramètres dont la dispersion par rapport à la moyenne est supérieure à un certain seuil, fonction notamment d'un écart type prédéterminé.

13. Système de commande selon l'une quelconque des revendications **11** ou 12, dans lequel chaque véhicule comprend des suspensions commandées avants et arrières et des moyens de commande desdites suspensions pour commander les suspensions arrières avec un jeu de paramètres spécifiques, proportionnel au jeu de paramètres des suspensions avants, décalé dans le temps, et éventuellement avec un ratio prédéterminé appliqué à la consigne de commande de l'électrovanne, le décalage dans le temps dépendant de l'empattement du véhicule et de la vitesse du véhicule lors du franchissement de la perturbation.

14. Système de commande selon l'une quelconque des revendications 11 à 13, dans lequel chaque véhicule comporte un capteur optique, notamment une caméra, pour déterminer la présence, la position et la taille d'une perturbation de la chaussée.

**Patentansprüche**

1. Verfahren zur Steuerung eines Kraftfahrzeugs, das eine Aufhängung mit steuerbarer Dämpfung umfasst, wobei die Aufhängung mit einem Hydraulikkreislauf über ein Magnetventil verbunden ist, so dass die Dämpfung modifiziert wird, indem der Ölvolumenstrom in dem Dämpfer begrenzt wird, wobei das Verfahren zur Steuerung die folgenden Schritte umfasst:

     • wenn die Position und die Fahrtrichtung des Fahrzeugs einer Position und einer Richtung entsprechen, die einer zu dämpfenden Störung zugeordnet sind und die in einer Karte gespeichert sind, wird ein Einlernen durchgeführt, indem ein neuer Parametersatz bestimmt wird, der von einem optimalen Parametersatz abhängig ist, und wird das Magnetventil gemäß dem neuen Parametersatz gesteuert, wobei ein Parametersatz einen Magnetventilsteuerungssollwert und eine Sollwertanwendungsdauer umfasst,
     • die Position, die Geschwindigkeit und die Richtung des Fahrzeugs sowie das Datum werden erfasst, dann wird eine dem neuen Parametersatz zugeordnete Wertung bestimmt,
     • es wird bestimmt, ob die dem neuen Parametersatz zugeordnete Wertung höher als die Wertung des gespeicherten optimalen Parametersatzes ist, wobei die einem Parametersatz zugeordnete Wertung von dem zugeordneten Sollwert, von der Überschreitung des Sollwerts und von der zum Erreichen des eingeschwungenen Zustands erforderlichen Dauer abhängig ist,
     • wenn dies der Fall ist, wird der optimale Parametersatz in Abhängigkeit von dem Vorzeichen der Änderung der Parameter als höherer oder geringerer Parametersatz erfasst, dann der neue Parametersatz als optimaler Parametersatz gespeichert.

2. Verfahren zur Steuerung nach Anspruch 1, bei dem zum Durchführen des Einlernens eines neuen Parametersatzes der Wert des Sollwerts bei jedem Durchfahren der Störung um einen vorbestimmten Schritt inkrementiert wird, solange sich die Wertung verbessert, dann die Anwendungsdauer bei jedem weiteren Durchfahren um einen vorbestimmten Schritt inkrementiert wird, solange sich die Wertung verbessert, wenn sich die Wertung nicht weiter verbessert, davon ausgegangen wird, dass das Einlernen des Parametersatzes beendet ist.

3. Verfahren zur Steuerung nach einem der vorhergehenden Ansprüche, bei dem der Fahrmodus bei der Berechnung der Wertung berücksichtigt wird.

4. Verfahren zur Steuerung nach einem der vorhergehenden Ansprüche, bei dem die Sollwerte des Magnetventils in Abhängigkeit von der Geschwindigkeit und von der Masse des Fahrzeugs vereinheitlicht werden.

5. Verfahren zur Steuerung nach einem der vorhergehenden Ansprüche, bei dem das Fahrzeug vordere und hintere gesteuerte Aufhängungen umfasst, die hinteren Aufhängungen mit einem Satz spezifischer Parameter, der proportional zu dem Parametersatz der vorderen Aufhängungen ist, zeitlich versetzt und gegebenenfalls mit einem auf den Magnetventilsteuerungssollwert angewandten vorbestimmten Verhältnis gesteuert werden, wobei der zeitliche Versatz vom Radstand des Fahrzeugs und von der Geschwindigkeit des Fahrzeugs beim Überwinden der Störung abhängt.

6. Verfahren zur Steuerung nach einem der vorhergehenden Ansprüche, bei dem, wenn eine Vertikalbeschleunigungsänderung über einem Schwellenwert oder eine Frequenz der Vertikalbeschleunigungsänderung über einem Schwellenwert bestimmt wird, bestimmt wird, dass gerade eine Störung überwunden wird, und wenn die Position und die Fahrtrichtung des Fahrzeug keiner Position und keiner Richtung entsprechen, die einer zu dämpfenden Störung zugeordnet sind und die in der Karte gespeichert sind, die Position und die Richtung des Fahrzeugs in der Karte erfasst werden und im Übrigen die Geschwindigkeit und das Datum erfasst werden, dann eine dem laufenden Parametersatz zugeordnete Wertung bestimmt wird und der aktuelle Parametersatz als optimaler Parametersatz für diese Störung erfasst wird.

7. Verfahren zur Steuerung nach Anspruch 6, bei dem die punktuelle, kurze oder lange Art der Störung in Abhängigkeit von der Anzahl und von der Amplitude der Vertikalbeschleunigungsänderungen sowie von den diesen Änderungen zugeordneten Positionen oder in Abhängigkeit von der Überschreitungsdauer des Änderungsfrequenzschwellenwerts bestimmt wird.

8. Verfahren zur Steuerung nach Anspruch 7, bei dem, wenn die Störung punktuell ist, ein Parametersatz am Eingang bestimmt wird, wenn die Störung kurz ist, zusätzlich ein Parametersatz am Ausgang der Störung bestimmt wird, wenn die Störung lang ist, auch ein Parametersatz in der Mitte der Störung bestimmt wird, wobei jeder Parametersatz Gegenstand eines Einlernens ist.

9. Verfahren zur Steuerung nach einem der vorhergehenden Ansprüche, bei dem, wenn die Position und die Fahrtrichtung des Fahrzeugs einer Position und einer vorbestimmten Richtung einer zu dämpfenden Störung entsprechen und wenn bestimmt wird, dass die Vertikalbeschleunigungsänderung null ist oder dass die Überschreitungsdauer des Änderungsfrequenzschwellenwerts null ist, davon ausgegangen wird, dass keine Störung mehr vorliegt, und die entsprechenden Daten daraufhin gelöscht werden.

10. Verfahren zur Steuerung nach einem der vorhergehenden Ansprüche, bei dem das Vorhandensein, die Position und die Größe einer Störung der Fahrbahn über einen optischen Sensor, insbesondere eine Kamera, bestimmt werden.

11. Steuerungssystem, das einen Server und mindestens zwei Kraftfahrzeuge umfasst, wobei jedes Fahrzeug eine Aufhängung mit steuerbarer Dämpfung umfasst, wobei die Aufhängung mit einem Hydraulikkreislauf über ein Magnetventil verbunden ist, so dass die Dämpfung modifiziert wird, indem der Ölvolumenstrom in dem Dämpfer begrenzt wird, und jedes mit verarbeitungsmitteln und Erfassungsmitteln versehen ist, die in der Lage sind, das Verfahren zur Steuerung nach einem der vorhergehenden Ansprüche auszuführen, bei dem jedes Fahrzeug an den Server Störungskartendaten überträgt, deren Einlernen beendet ist, und jedes Fahrzeug in der Lage ist, Kartendaten für Positionen anzufordern, die keinem Parametersatz in der Karte des Fahrzeugs zugeordnet sind, wobei die Kartendaten einen Parametersatz, die Störungskategorie, die Masse, die Position, die Richtung und die Geschwindigkeit des Fahrzeugs sowie die Komfortwertung, die dem Parametersatz zugeordnet sind, umfassen.

12. Steuerungssystem nach Anspruch 11, wobei die Verarbeitungsmittel des Servers dazu ausgestaltet sind, die Sortierung der von den Fahrzeugen empfangenen Daten auszuführen, indem die schwächsten Wertungen und/oder die Werte der Parameter, deren Streuung in Bezug auf den Mittelwert größer als ein bestimmter Schwellenwert ist, insbesondere in Abhängigkeit von einer vorbestimmten Standardabweichung, eliminiert werden.

13. Steuerungssystem nach einem der Ansprüche 11 oder 12, wobei jedes Fahrzeug vordere und hintere gesteuerte Aufhängungen umfasst und Mittel zur Steuerung der Aufhängungen, um die hinteren Aufhängungen mit einem Satz spezifischer Parameter, der proportional zu dem Parametersatz der vorderen Aufhängungen ist, zeitlich versetzt und gegebenenfalls mit einem auf den Magnetventilsteuerungssollwert angewandten vorbestimmten Verhältnis zu steuern, wobei der zeitliche Versatz vom Radstand des Fahrzeugs und von der Geschwindigkeit des Fahrzeugs beim Überwinden der Störung abhängt.

14. Steuerungssystem nach einem der Ansprüche 11 bis 13, wobei jedes Fahrzeug einen optischen Sensor beinhaltet, insbesondere eine Kamera, um das Vorhandensein, die Position und die Größe einer Störung der Fahrbahn zu bestimmen.

**Claims**

1. Method for controlling a motor vehicle comprising a variable damping suspension system, the suspension system being connected to a hydraulic circuit via a solenoid valve with a view to modification of damping through limitation of the flow of oil through a shock absorber, this control method comprising the following steps:

    • when the position and direction of travel of the vehicle correspond to a position and direction associated with a disturbance to be damped, which position and direction are stored in memory in a map, a learning operation is carried out by determining a new set of parameters dependent on an optimal set of parameters and the solenoid valve is controlled according to the new set of parameters, a set of parameters comprising a control setpoint for the solenoid valve and a length of time of application of the setpoint,
    • the position, speed and direction of the vehicle and the date are recorded and then a score associated with the new set of parameters is determined,
    • it is determined whether the score associated with the new set of parameters is greater than the score of the stored optimum set of parameters, the score associated with a set of parameters being dependent on the associated setpoint, on the overshoot of the setpoint and on the length of time required to reach the steady state,
    • if such is the case, the optimal set of parameters is recorded as being a set of parameters that is higher or lower, depending on the sign of the variation of the parameters, and then the new set of parameters is stored in memory as the optimal set of parameters.

2. Control method according to Claim 1, wherein, to carry out the operation of learning a new set of parameters, the value of the setpoint is incremented by a predetermined increment each time the disturbance is passed as long as the score improves, then the length of time of application is incremented by a predetermined increment each subsequent time the disturbance is passed as long as the score improves, and when the score ceases to improve, the operation of learning the set of parameters is considered to have ended.

3. Control method according to either of the preceding claims, wherein the driving mode is taken into account in the calculation of the score.

4. Control method according to any of the preceding claims, wherein the setpoints of the solenoid valve are uniformized depending on the speed and weight of the vehicle.

5. Control method according to any of the preceding claims, wherein the vehicle comprises controlled front and rear suspension systems, the rear suspension systems being controlled with a set of specific parameters that is proportional to the set of parameters of the front suspension systems, but offset in time, a predetermined ratio optionally being applied to the control setpoint of the solenoid valve, the offset in time depending on the wheelbase of the vehicle and on the speed of the vehicle as the disturbance is being crossed.

6. Control method according to any of the preceding claims, wherein, when a variation in vertical acceleration is determined as being greater than a threshold or a frequency of the variation in vertical acceleration is determined as being greater than a threshold, it is determined that a disturbance is being crossed, and when the position and direction of travel of the vehicle do not correspond to a position and direction associated with a disturbance to be damped stored in memory in the map, the position and direction of the vehicle are recorded in the map, and moreover the speed and date are recorded, then a score associated with the current set of parameters is determined and the current set of parameters is recorded as the optimal set of parameters for this disturbance.

7. Control method according to Claim 6, wherein the long, short or point-like nature of the disturbance is determined depending on the number and amplitude of the variations in vertical acceleration and on the positions associated with these variations, or depending on the length of time of exceedance of the variation frequency threshold.

8. Control method according to Claim 7, wherein when the disturbance is point-like, a set of entry parameters is determined, when the disturbance is short, a set of exit parameters is in addition determined on exiting the disturbance, and when the disturbance is long, a set of parameters is also determined in the middle of the disturbance, each set of parameters being the subject of a learning operation.

9. Control method according to any of the preceding claims, wherein, when the position and direction of travel of the vehicle correspond to a predetermined position and direction of a disturbance to be damped, and when it is determined that the variation in vertical acceleration is zero or the length of time of exceedance of the variation frequency threshold is zero, the disturbance is considered to no longer exist and the corresponding data are then deleted.

10. Control method according to any of the preceding claims, wherein the presence, position and size of a disturbance in the roadway are determined by means of an optical sensor, a camera in particular.

11. Control system comprising a server and at least two motor vehicles, each vehicle comprising a variable damping suspension system, the suspension system being connected to a hydraulic circuit via a solenoid valve with a view to modification of damping through limitation of the flow of oil through a shock absorber, and each vehicle being equipped with processing means and acquiring means capable of executing the control method according to any of the preceding claims, wherein each vehicle transmits to the server disturbance map data the learning operation of which has ended, and each vehicle is capable of requesting map data for positions that are not associated with a set of parameters in the map of the vehicle, the map data including a set of parameters, the disturbance category, the weight, position, direction and speed of the vehicle, and the comfort score associated with said set of parameters.

12. Control system according to Claim 11, wherein the processing means of the server are configured to sort data received from vehicles so as to remove the lowest scores and/or the values of parameters the dispersion of which with respect to the mean is greater than a certain threshold, dependent in particular on a predetermined standard deviation.

13. Control system according to either of Claims 11 and 12, wherein each vehicle comprises controlled front and rear suspension systems and means for controlling said suspension systems with a view to controlling the rear suspension systems with a set of specific parameters that is proportional to the set of parameters of the front suspension systems, but offset in time, a predetermined ratio optionally being applied to the control setpoint of the solenoid valve, the offset in time depending on the wheelbase of the vehicle and on the speed of the vehicle as the disturbance is being crossed.

14. Control system according to any of Claims 11 to 13, wherein each vehicle comprises an optical sensor, a camera in particular, with a view to determining the presence, position and size of a disturbance in the roadway.

[Fig. 1]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20140195112 A
- US 20150343873 A
- CN 110654195
- WO 2021041950 A
- US 2021178845 A1
- US 2014195112 A1
- WO 2014145018 A2
- EP 0417695 A2
- FR 3078154 A1